# EUROPEAN PATENT APPLICATION

(11) **EP 2 308 288 A1**
(43) Date of publication of application: **13.04.2011**
(21) Application number: 10251758.8
(22) Date of filing: 07.10.2010
(51) Int. Cl.: A01M 1/04

(54) **Insect trap**

(30) Priority: 09.10.2009 GB 0917686
(71) Applicant: Russell IPM Limited, Deeside, Clwyd CH5 3RQ (GB)
(72) Inventor: Shakir Mahmood, Al-Zaidl, Deeside Clwyd CH5 3RQ (GB)
(74) Representative: Cawley, Aimee Elizabeth

(57) **Abstract**

An insect trap (10) comprising a trapping container (11) having a base and side walls, a chemical attractant (13) arranged with respect to the container so as to attract insects to the container for trapping, a light source (14) arranged with respect to the container so as to attract insects to the container for trapping, and a rechargeable electrical power source (15), capable of being electrically recharged by ambient light, in electrical communication with the light source, wherein the trapping container is fillable with a liquid, whereby a liquid surface is exposed for trapping the insects.

## Description

The present invention relates to an insect trap.

Mass trapping of insect pests is a well-documented practice. One technique employs species-specific insect sex pheromones to attract male insects to a suitable trap, resulting in a decline in the male population of that species and consequently a reduction in the mating success rate. Reduced mating leads to a decline in the population of that insect species and reduced environmental impact, for example a reduction in crop damage.

The main limitation of mass trapping of insects using such pheromones is that, whilst male insects are targeted, fertilised female insects are still able to cause significant environmental damage. Furthermore, in areas of very high pest population, the pheromone traps simply do not trap male insects quickly enough, leaving a substantial number of males to mate.

Another trapping technique employs a light source. In terms of mass trapping, the main advantage is that the light attracts female insects as well as male insects. However, the technique is non-species specific, meaning that all kinds of different insect species may be trapped, including those which are beneficial to the environment.

To alleviate this problem of non-targeted trapping using light, numerous attempts have been made to study the responses of different insect species to different colours of light. To date, no conclusive results have been published.

A further limitation of a light trap is the need for electricity to power the light. Typically agricultural locations such as fields and forests are remote from electricity sources, and so it has been proposed in US patent number 5,301,456 to provide an insect trap using a low voltage lamp powered by a battery. The battery is able to provide 120 hours of power to the lamp before needing replacement, which is a useful step forwards for monitoring insects in a remote location, but not really very useful for continual mass trapping purposes.

It would therefore be desirable to provide an insect trap which does not suffer from the aforementioned problems, and which is both species-specific and capable of equally trapping males and females of the species.

Accordingly, the present invention provides an insect trap comprising a trapping container having a base and side walls, a chemical attractant arranged with respect to the container so as to attract insects to the container for trapping, a light source arranged with respect to the container so as to attract insects to the container for trapping, and a rechargeable electrical power source, capable of being electrically recharged by ambient light and storing electrical power, in electrical communication with the light source, wherein the trapping container is fillable with a liquid, whereby a liquid surface is exposed for trapping the insects.

It is believed that provision of such a liquid-based insect trap having both a chemical attractant and a light source to attract male and female insects of a particular species is a step forwards in terms of a mass trapping technique. Furthermore, provision of a rechargeable power source, which may in the form of a solar panel and associated rechargeable battery, provides flexibility of location for the trap.

The light source may further be in electrical communication with a light-sensitive switch, such as a photocell. Such a switch may regulate the activation / deactivation of the light source, depending on the intensity of ambient light incident upon said switch, thereby enabling on-off functionality for night-time/daytime operation of the trap.

Additionally, or alternatively, the light source may be in electrical communication with a timer switch, such as an electronic timer, which could also regulate the activation / deactivation of the light source, depending on the time of day.

Preferably the liquid used to fill the container may be water. Further preferably, a surfactant may be included in the water to modify its surface tension. The effect of this is two-fold: firstly, insects may be disorientated by optical distortions thereby created in the water causing them to miscalculate their landing on the surface of the water, such that they fly into the water and are trapped, and secondly, to assist in quickly and effectively engulfing the trapped insects within the water.

The combination of trapping container, in particular the colour of the base of the trapping container, and the light source used is preferably such that light of a wavelength of 490 nm or shorter is emitted / reflected by the trapping container. Wavelengths in the blue end of the electromagnetic spectrum appear to encourage more insects, of both the male and female variety, to be attracted to a trap and become trapped.

There are three ways in which emission / reflection of light of a wavelength of 490 nm or shorter may be achieved: (1) by providing the base of the trapping container as white in colour and the light source to emit blue light of a wavelength less than 490 nm; (2) by providing the base of the trapping container as blue in colour such that when white light is incident upon it, blue light of wavelength less than 490 nm is emitted by the base; (3) both the light source and the colour of the base of the trapping container are chosen such that they optically interact to emit blue light of wavelength less than 490 nm.

Advantageously, the light source may be a light emitting diode (LED). The low intensity of light emitted by an LED may preferentially prevent attraction and trapping of insects that would not have been a problem at the outset, and which would only have been attracted by a high intensity light source.

Preferably the light source may be arranged at a predetermined height above the trapping container. Beneficially this height may be in the range of from 5 cm to 25 cm, preferably in the range of from 7 cm to 20 cm and more preferably from 7 cm to 17 cm.

Preferably the light source may be arranged substantially centrally with the respect to the trapping container. In this manner, liquid in the trapping container may surround the light source, allowing insects flying in from all directions as they are attracted to the light to be trapped in the liquid.

Further preferably, the light source may be oriented so that the light emitted is substantially focused towards the liquid in the trapping container, thereby minimising the degree of diffuse light surrounding the light source. Such orientation of the light source is beneficial because it can reduce the number of beneficial (i.e. non-pest) insects that may otherwise may attracted to the insect trap of the invention and subsequently trapped. Furthermore, such orientation of the light source may mitigate any localised increase in insect population (and consequential plant damage that may be caused) that may otherwise be observed in the immediate vicinity of an insect trap according to the invention. In other words, by orienting the light source in such manner, it appears to be possible to "direct" insects that are attracted to the insect trap by the chemical attractant, hence improving the the efficiency of the trap.

The chemical attractant used may be a semiochemical, including one or more of an insect pheromone, a kairomone or a host plant volatile. However, the chemical attractant is more preferably an insect sex pheromone. Further preferably the insect to be trapped may be *tuta absoluta,* otherwise known as the Tomato Leaf miner moth. In favourable weather conditions, ten to twelve generations of *tuta absoluta* can occur in a single year, with the larvae feeding on tomato plants, eggplants and potatoes, to name but a few. Previously a South American pest, in recent years *tuta absoluta* has been identified in Europe and is now endangering crop production around the Mediterranean, resulting in up to 100 % crop loss. As *tuta absoluta* is capable of developing resistance to conventional insecticides very rapidly, application of the present invention to this pest would clearly be beneficial.

In the case of *tuta absoluta,* if both a light-sensitive switch and a dependent timer switch are both associated with the light source, the trap could be set to be active between sunset and sunrise, and furthermore between the hours of 2am and 8am, preferably between 3am and 6am. This may reduce the occurrence of capture of insects other than of the *tuta absoluta* species, and concentrate trapping of *tuta absoluta* to the observed period of peak activity of this insect species, i.e. between around 3am and 6am.

Preferably the chemical attractant, the light source and the rechargeable power source may all be mounted on an arm which is removably fittable to the trapping container. To achieve this, the trapping container may be provided with a locating means to which the arm is removably snap-fittable. Said locating means may be provided on the upper surface of the base of the trapping container, preferably towards its centre. Correspondingly, the arm may be provided with cooperative locating means. Said cooperative locating means may be provided at one end of the arm, which may be the end to which the light source is mounted, thereby enabling the light source to be centrally located with respect to the trapping container.

Alternatively, one or all of the chemical attractant, the light source and the rechargeable power source may be individually mounted on their own separate limbs, which may be removably fitted to locations on the trapping container.

Advantageously, the base of the trapping container may be patterned. The pattern may be two-dimensional or it may be three-dimensional. Preferably, the pattern may be a two-dimensional black and white chequered pattern. It seems that such a pattern enhances the effect of the optical distortion described earlier.

Alternatively, the base of the trapping container may be substantially white in colour, thereby enhancing the optical distortion effects discussed earlier.

For a better understanding, the present invention will now be more particularly described, by way of non-limiting example only, with reference to and as shown in the accompany schematic drawings (not to scale), in which:
Figure 1 is an exploded perspective view of an insect trap according to the invention;
Figure 2 is a perspective view of the insect trap shown in Figure 1 in its assembled state;
Figure 3 is an exploded perspective view of a modified version of the insect trap shown in Figure 1; and
Figure 4 is a perspective view of the insect trap shown in Figure 3 in its assembled state.

In the Figures an insect trap 10 is shown comprising a trapping container 11, a chemical attractant cage 12 in which chemical attractant 13, in the form of the sex pheromone of *tuta absoluta* is located, and a light source 14, in the form of a blue LED lamp (emitting in the wavelength range: 450-490 nm), having an integral rechargeable electrical power source 15, in the form of a small solar panel, electrically associated with a rechargeable battery for storing the electrical power until it is needed. Light source 14 may additionally be electrically connected to a light-sensitive switch, for example a photocell (not shown), and/or a timer switch, for example an electronic timer (not shown).

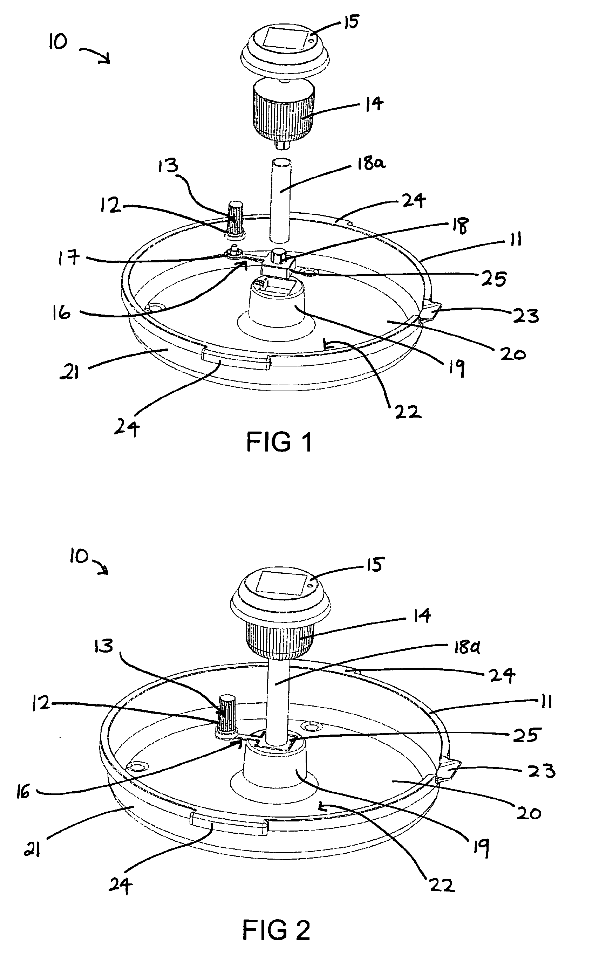

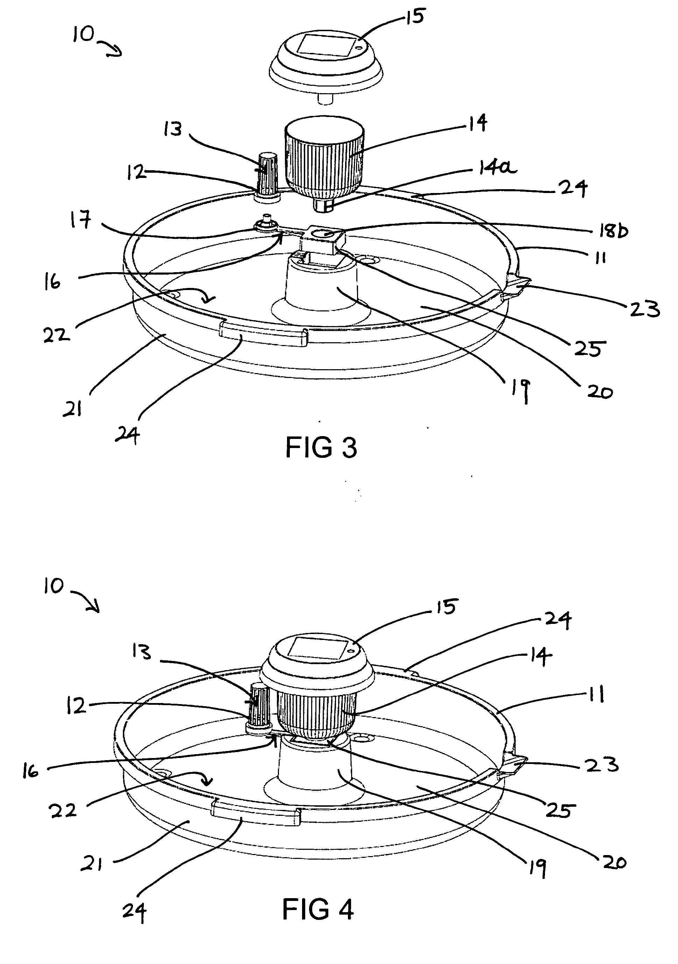

Chemical attractant 13 in its cage 12 is mounted on an arm 16, which is elongate and has two end portions 17,18. Chemical attractant cage 12 is removably mountable on end portion 17, whilst light source 14 and power source 15 are removably mountable on end portion 18. In Figures 1 and 2, light source 14 and power source 15 are mounted *via* a stem 18a so that both are raised above container 11. In Figures 3 and 4, light source 14 and power source 15 are mounted directly onto arm 16 - light source 14 is provided with a projection 14a which cooperatively fits into recess 18b provided in end portion 18. Further arms could be provided to extend from end portion 18 such that one or more further chemical attractant cages could be mounted. Each of these further cages could contain a chemical attractant which is either an identical to or different from that found in cage 12 on end portion 17.

End portion 17 is adapted to as to be able to receive and retain cage 12, such that attractant 13 is located a distance away from light source 14 and above trapping container 11.

End portion 18 of arm 16 is shaped so as to have two functions: firstly to receive and retain light source 14, and secondly to be snap-fittable into a locating means 19 of trapping container 11.

Trapping container 11 is in the form of a dish into which a liquid (not shown), such an aqueous surfactant solution, may be introduced. Container 11 has a base 20 and side wall 21 (of which there is one because in this embodiment, container 11 is circular, although it could be of any other shape) which extends around the periphery of base 20. Base 20 has an upper surface 22 on which, and in the centre of which, locating means 19 is provided.

Locating means 19 is in the form of a female-type connection into which a cooperative locating means 25, which is in the form of a male-type connection, is snap-fittable. Of course the male-type and female-type connections could be interchanged, and indeed any other type of easily removable connection could instead be used. Once a connection is made, light source 14 is typically positioned approximately 17 cm above trapping container 11, and in the centre thereof in the embodiment shown in Figures 1 and 2.

The upper surface 22 of base 20 may also provided with a pattern, which could be a two-dimensional or a three-dimensional pattern. For example, the pattern could be a three-dimensional series of concentric ribs and radially-extending ribs (not shown). The effect of such a pattern would be to enhance the optical distortion present when an aqueous solution of surfactant is added to container 11. Such ribs would also serve to strengthen base 20. Alternatively, base 20 could be provided with a two-dimensional black and white chequered pattern (not shown).

Trapping contain 11 is additionally provided with a spout 23 for pouring away liquid (not shown) once it has been saturated with trapped insects and handles 24 to increase its portability.

A number of experiments have been conducted using an insect trap of the type described herein, the results of which are presented below.

### Experiment 1: determination of the success of an insect trap according to the invention compared to prior art insect traps

Four water traps having bases of 32 cm diameter were placed 30 cm above ground level in a greenhouse in which tomatoes were being cultivated and which had a high level of *tuta absoluta* infestation. They were (1) a prior art water trap in which an aqueous solution of surfactant is used, (2) a prior art water trap including some *tuta absoluta* sex pheromone, (3) a prior art water trap including a solar-powered white LED and (4) a water trap according to the invention including both a solar-powered white LED mounted 7 cm above the water's surface and some *tuta absoluta* sex pheromone.

The gross and net counts of *tuta absoluta* caught in the different traps over five consecutive days in September were as shown in Tables Ia and Ib below consecutively, along with the average count for each trap over the five days and a "Performance Index" which compares the performance of traps (3) and (4) to trap (2). The net count is the count for a particular trap with the prior art water trap (1) results subtracted.

**Table Ia: Gross Count**

| **Trap** | **Day 1** | **Day 2** | **Day 3** | **Day 4** | **Day 5** | **Average** | **Performance Index** |
|---|---|---|---|---|---|---|---|
| **1** | 48 | 168 | 148 | 160 | 150 | 134.8 | - |
| **2** | 1157 | 969 | 643 | 550 | 451 | 754 | 1.00 |
| **3** | 475 | 449 | 598 | 380 | 250 | 430.4 | 0.57 |
| **4** | 1735 | 1571 | 1364 | 990 | 886 | 1309.2 | 1.74 |
| **TOTAL** | 3415 | 3157 | 2753 | 2080 | 1737 | 2628.4 | - |

Table Ia clearly shows that trap (4) performs 74 % better than trap (2). However it was surprising to see that the presence of a light source AND a pheromone source in trap (4) leads to a result that is more than purely additive over the individual results of traps (2) and (3); a 17 % synergistic improvement is observed with trap (4) compared to the combined results of traps (2) and (3).

**Table Ib: Net Count**

| **Trap** | **Day 1** | **Day 2** | **Day 3** | **Day 4** | **Day 5** | **Average** | **Performance Index** |
|---|---|---|---|---|---|---|---|
| **2** | 1109 | 801 | 495 | 390 | 301 | 619.2 | 1.00 |
| **3** | 427 | 281 | 450 | 220 | 100 | 295.6 | 0.48 |
| **4** | 1687 | 1403 | 1216 | 830 | 736 | 1174.4 | 1.90 |

Table Ib mirrors and improves upon the results shown in Table Ia. Now trap (4) performs 90 % better than trap (2) and a synergistic improvement of 42 % is observed.

### Experiment 2: determination of the optimum colour of light source

Three traps according to the invention having bases of 32 cm diameter were placed in a greenhouse in which tomatoes were being cultivated and which had a moderate level of *tuta absoluta* infestation. The tomato plants were around one metre tall and the traps were positioned about one third of the way up the plants. The traps were provided with differently coloured light sources mounted 7 cm above the water's surface: white light (1), green light (2) and blue light (3). The traps were set at 12:00 and checked at intervals throughout the subsequent twenty four hour period. This experiment was repeated over three successive days. The gross counts of *tuta absoluta* caught in the different traps are shown in Table II overleaf, along with the percentage difference observed between traps (2) and (1), and between traps (3) and (1).

**Table II**

| **Trap** | **Time:** | **18:00** | **00:00** | **03:00** | **06:00** | **12:00** | **TOTAL** |
|---|---|---|---|---|---|---|---|
| **(1)** | **Day 1** | 1 | 1 | 2 | 110 | 2 | 116 |
| | **Day 2** | 2 | 0 | 0 | 103 | 5 | 110 |
| | **Day 3** | 1 | 1 | 0 | 95 | 4 | 101 |
| | **Average** | 1.3 | 0.7 | 0.7 | 102.7 | 3.7 | 109.0 |
| **(2)** | **Day 1** | 3 | 3 | 3 | 130 | 2 | 141 |
| | **Day 2** | 2 | 2 | 1 | 123 | 3 | 131 |
| | **Day 3** | 1 | 2 | 0 | 105 | 4 | 112 |
| | **Average** | 2.0 | 2.3 | 1.3 | 119.3 | 3.0 | 128.0 |
| | **Improvement** | **50%** | **250%** | **100%** | **16%** | **-18%** | **17%** |
| **(3)** | **Day 1** | 2 | 5 | 5 | 150 | 5 | 167 |
| | **Day 2** | 1 | 3 | 4 | 136 | 3 | 147 |
| | **Day 3** | 1 | 2 | 2 | 125 | 8 | 138 |
| | **Average** | 1.5 | 3.5 | 3.5 | 137.5 | 6.5 | 152.5 |
| | **Improvement** | **13%** | **425 %** | **425 %** | **34 %** | **77 %** | **40%** |

Table II clearly shows that trap (2) performs 17 % better than trap (1), but that trap (3) performs 40 % better than trap (1). Table II further shows that the period of peak activity of *tuta absoluta* is around 6am.

### Experiment 3: determination of the optimum combination of colour of light source and colour of base of trapping container

Five traps according to the invention having bases of 32 cm diameter were placed in a greenhouse in which tomatoes were being cultivated and which had a moderate level of *tuta absoluta* infestation. The tomato plants were around one metre tall and the traps were positioned about one third of the way up the plants. The traps were provided with differently coloured combinations of trapping containers and light sources. The traps were set at 12:00 and checked at intervals throughout the subsequent twenty four hour period. This experiment was repeated over two successive days. The gross counts of *tuta absoluta* caught in the different traps are shown in Table III below.

**Table III**

| | **Base Colour** | **White LED** | **Blue LED (450-490 nm)** |
|---|---|---|---|
| Day 1 | White | 68 | 120 |
| Day 2 | | 69 | 115 |
| **Average** | | **68.5** | **117.5** |
| Day 1 | Light Blue | 140 | - |
| Day 2 | | 130 | 150 |
| **Average** | | **135** | **150** |
| Day 1 | Dark Blue | 70 | - |
| Day 2 | | 80 | - |
| **Average** | | **75** | - |
| Day 1 | Black & White Chequered | - | 123 |
| Day 2 | | - | - |
| **Average** | | - | **123** |

Table III clearly shows that the best combination in terms of insect attracting and capture is the blue LED plus light blue base, however this is closely followed by the white LED and light blue base, and then the other two combinations incorporating a blue LED.

### Experiment 4: determination of the optimum size of trapping container

Three traps according to the invention were placed in a greenhouse in which tomatoes were being cultivated and which had a moderate level of *tuta absoluta* infestation. The tomato plants were around one metre tall and the traps were positioned about one third of the way up the plants. The traps were provided with differently sized circular trapping containers having the following diameters: 27 cm (1), 32 cm (2) and 41 cm (3). The traps were set at 12:00 and checked at intervals throughout the subsequent twenty four hour period. This experiment was repeated over two successive days. The gross counts of *tuta absoluta* caught in the different traps are shown in Table IV below, along with the percentage difference observed in surface area and trap number between traps (2) and (1), and between traps (3) and (2).

**Table IV**

| **Trap** | 1 | 2 | 3 |
|---|---|---|---|
| **Day 1 Count** | 73 | 120 | 150 |
| **Day 2 Count** | 60 | 110 | 140 |
| **Average Count** | 66.5 | 115 | 145 |
| **% Increase in Surface Area** | 0 | 19 | 28 |
| **% Increase in Count Number** | 0 | 73 | 26 |

It is clear that an optimum diameter lies in the range of 32 cm to 41 cm because increasing the diameter by only 19 % of its original size leads to a 73 % increase in the average number of insects trapped, whereas further increasing the diameter by 28 % does not lead to a corresponding increase in the average number of insects trapped.

### Experiment 5: determination of the optimum height of the light source above the trapping container

Three traps according to the invention were placed in a greenhouse in which tomatoes were being cultivated and which had a moderate level of *tuta absoluta* infestation. The tomato plants were around one metre tall and the traps were positioned about one third of the way up the plants. The traps were provided with light sources at different heights above trapping containers: 1 cm (1), 7 cm (2) and 17 cm (3). The traps were set at 12:00 and checked at intervals throughout the subsequent twenty four hour period. This experiment was repeated over two successive days. The gross counts of *tuta absoluta* caught in the different traps are shown in Table V below, along with the difference observed in height and trap number between traps (2) and (1), and between traps (3) and (2).

**Table V**

| **Trap** | 1 | 2 | 3 |
|---|---|---|---|
| **Day 1 Count** | 69 | 138 | 228 |
| **Day 2 Count** | 65 | 122 | 213 |
| **Average Count** | 67 | 130 | 220.5 |
| **% Increase in Height** | 0 | 600 | 143 |
| **% Increase in Count Number** | 0 | 94 | 70 |

It appears that an optimum height lies somewhere above 7 cm, and probably above 17 cm, because increasing the height by 600 % (from 1 cm to 7 cm) leads to a 94 % increase in the average number of insects trapped (a height to capture ratio of 6.4:1), and then further increasing the height by 143 % (from 7 cm to 17 cm) leads to a further 70 % increase in the average number of insects trapped (a reduced height to capture ratio of 2:1).

### Experiment 6: evaluation of the invention

A water trap according to the invention (1), having a white-coloured base of 41 cm diameter and a blue LED mounted 17 cm above the surface of the water, and a prior art water trap (2), having a dark-coloured base of 41 cm diameter and no light, were placed in a greenhouse in which tomatoes were being cultivated and which had a moderate level of *tuta absoluta* infestation. The tomato plants were around one metre tall and the traps were positioned about one third of the way up the plants, and 15-20 metres apart. Both traps were provided with a source of *tuta absoluta* sex pheromone. The traps were set at 12:00 and checked once twenty four hours later. The gross counts of *tuta absoluta* caught in the different traps are shown in Table VI below.

**Table VI**

| | **Trap (1)** | **Trap (2)** |
|---|---|---|
| **Count** | 212 | 97 |
| **% Increase in Count Number** | 119 | 0 |

It can be seen that, for an optimised base diameter, the combined effects of base colour, presence of a light source, the colour of the light source and its height above the surface of the water led to a 119 % increase in the number of insects trapped in a twenty four hour period.

## Claims

1. An insect trap comprising:
a trapping container having a base and side walls,
a chemical attractant arranged with respect to the container so as to attract insects to the container for trapping,
a light source arranged with respect to the container so as to attract insects to the container for trapping, and
a rechargeable electrical power source, capable of being electrically recharged by ambient light, in electrical communication with the light source,
wherein the trapping container is fillable with a liquid, whereby a liquid surface is exposed for trapping the insects, and wherein the combination of trapping container, in particular the colour of the base of the trapping container, and the light source is such that light of a wavelength of 490 nm or shorter is emitted / reflected by the trapping container.

2. An insect trap as claimed in claim 1 wherein the liquid is water.

3. An insect trap as claimed in claim 2 wherein a surfactant is included in the liquid.

4. An insect trap as claimed in claim 1 wherein the base of the trapping container is provided as white in colour and the light source emits blue light of a wavelength of 490 nm or less.

5. An insect trap as claimed in claim 1 wherein the base of the trapping container is provided as blue in colour such that when white light is incident upon it, blue light of wavelength 490 nm or shorter is emitted by the base.

6. An insect trap as claimed in claim 1 wherein the light source and the colour of the base of the trapping container are chosen such that they optically interact to emit blue light of wavelength less than 490 nm.

7. An insect trap as claimed in any preceding claim wherein the light source is an LED.

8. An insect trap as claimed in any preceding claim wherein the light source is arranged at a predetermined height above the trapping container.

9. An insect trap as claimed in claim 8 wherein the height is in the range of from 5 cm to 25 cm.

10. An insect trap as claimed in any preceding claim wherein the light source is arranged substantially centrally with the respect to the trapping container.

11. An insect trap as claimed in any preceding claim wherein the chemical attractant is a semiochemical, including one or more of an insect pheromone, a kairomone or a host plant volatile, and wherein the insect is preferably *tuta absoluta.*

12. An insect trap as claimed in any preceding claim wherein the chemical attractant, the light source and the rechargeable power source are all mounted on an arm which is removably fittable to the trapping container.

13. An insect trap as claimed in claim 12 wherein the trapping container is provided with a locating means to which the arm is removably snap-fittable.

14. An insect trap as claimed in claim 13 wherein the arm is provided with cooperative locating means.

15. An insect trap as claimed in any preceding claim wherein the base of the trapping container is patterned, and wherein the pattern is preferably a black and white chequered pattern.
